# EUROPEAN PATENT SPECIFICATION

(11) **EP 0 435 266 B1**
(45) Date of publication and mention of the grant of the patent: **27.04.1994**
(21) Application number: 90125534.9
(22) Date of filing: 27.12.1990
(51) Int. Cl.: B21D 31/04

(54) **Method for manufacturing expanded mesh sheet and apparatus for carrying out method**
Verfahren und Vorrichtung zum Formen von Streckmetall
Procédé de fabrication des treillis à métal déployé et dispositif pour réaliser ledit procédé

(30) Priority: 28.12.1989 JP 344095/89
(43) Date of publication of application: 03.07.1991
(73) Proprietor: MATSUSHITA ELECTRIC INDUSTRIAL CO., LTD., Kadoma-shi, Osaka-fu, 571 (JP)
(72) Inventor: Tanaka, Masahiro, Hirakata-shi, Osaka-fu (JP); Kobayashi, Hiroyuki, Yawata-shi, Kyoto-fu (JP); Inanobe, Akira, Toyohashi-shi, Aichi-ken (JP); Goda, Yoshio, Yao-shi, Osaka-fu (JP)
(74) Representative: Eisenführ, Speiser & Partner

(56) References cited:
- GB-A- 2 034 610
- GB-A- 2 054 438
- GB-A- 2 120 138
- US-A- 1 578 366
- US-A- 1 927 542
- US-A- 4 305 187

## Description

The present invention relates to a method for manufacturing an expanded mesh sheet such as a latticed electrode for use in a battery and a manufacturing apparatus for carrying out the method.

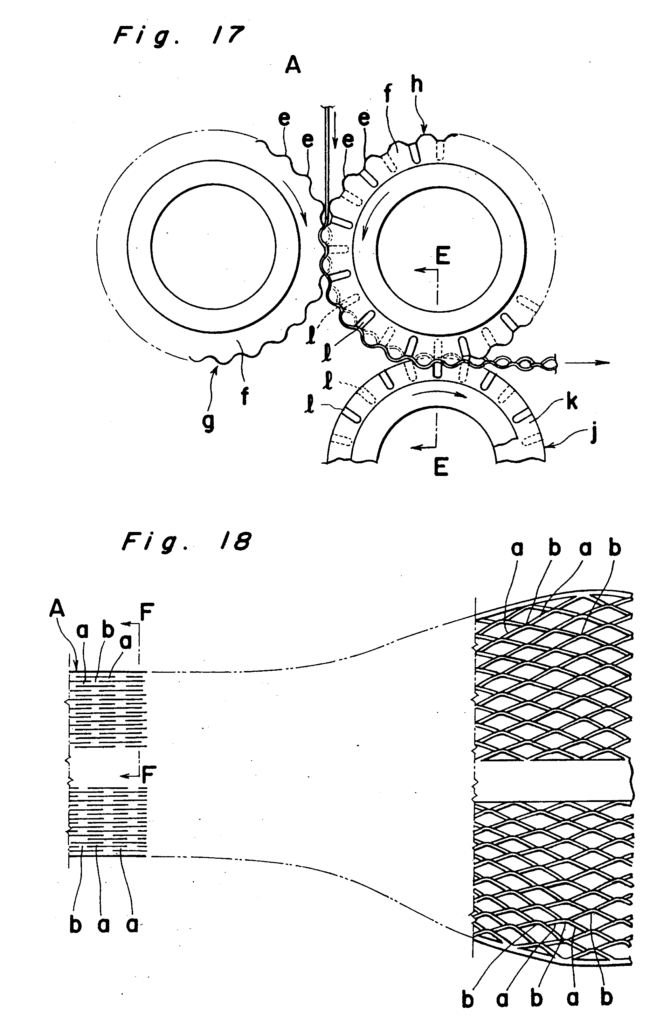

As shown in Fig. 18, in an expanded mesh sheet, many strip-shaped lift portions (a) are connected with each other in a zigzag configuration by a latticed connecting portion (b). An apparatus for manufacturing such an expanded mesh sheet is proposed in GB-A-2034610 corresponding to JP-A-60-29573 from which the invention proceeds.

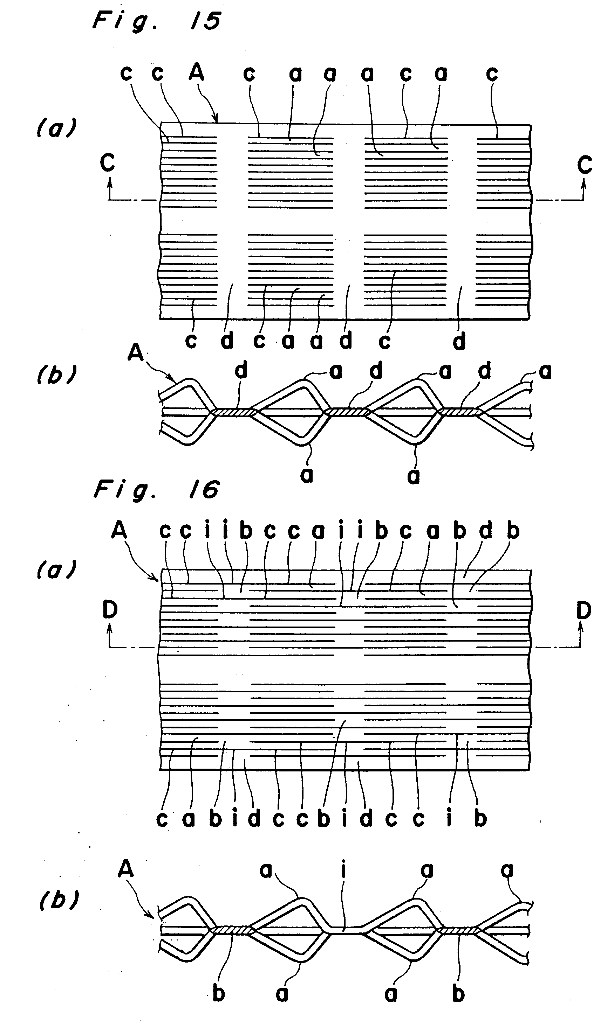

According to this conventional art, as shown in Figs. 15(a) and 15(b), a plurality of slits (c) are intermittently formed on a strip (A) in the longitudinal direction thereof as the first process. In this stage, the slits (c) are arranged in parallel with each other on the strip (A) and the strip-shaped lift portion (a) is formed by the adjacent slits (c). At this time, the strip-shaped lift portions (a) adjacent to each other in the widthwise direction of the strip (A) are shaped by curvedly bend it in the direction opposite to each other and approximately in the thickness direction of the strip. A flat portion (d) is positioned widthwise in a belt-like configuration between the slits.

As shown in Fig. 17, the first process is carried out by a first roll (g) comprising a plurality of disk-shaped cutters (f), having projections (e) provided at predetermined pitches in the periphery thereof, superimposed one on the other other at predetermined intervals and a second roll (h). Each strip-shaped lift portion (a) is pressed against the projection (e) approximately in the thickness direction of the strip and shaped by curvedly bend it between adjacent flat portions (d).

As shown in Figs. 16(a) and 16(b), a slit (i) for connecting the adjacent slits (c) is formed in the flat portion (d) in the second process. The slit (i) is formed alternately widthwise and formed in every other flat portion (d). The portion between the slits (i) adjacent to each other widthwise serves as the connecting portion (b).

The second process is performed by the second roll (h) and a third roll (j) as shown in Fig. 17. The third roll (j) comprises a plurality of disk-shaped cutters (k), having the projection (e) not formed thereon, superimposed one on the other and reliefs (l) are provided at predetermined pitches in the right and left sides alternately on both sides of the periphery of the disk-shaped cutter (k). Similarly, the relief (l) is provided on the disk-shaped cutter (f) of the second roll (h) and opposed to the relief (l) of the disk-shaped cutter (k).

In the third process, the strip (A) having the strip-shaped lift portion (a) and the connecting portion (b) formed thereon is extendably expanded widthwise as shown in Fig. 18.

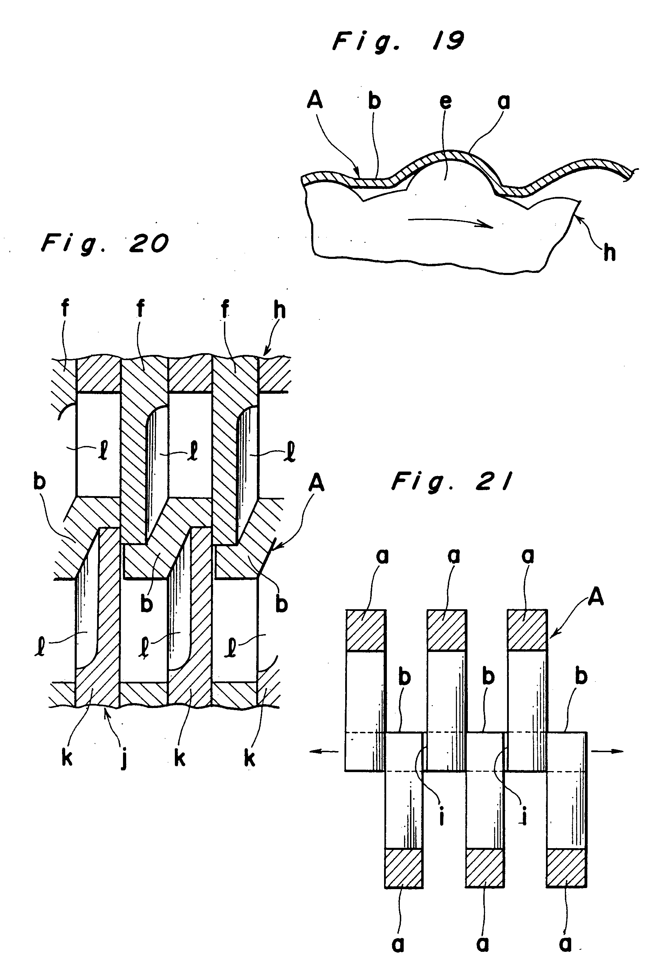

However, the conventional art has the following issues:
1. Slits are formed in two processes and the use of two rolls are necessary for each process. Therefore, time-taking adjustments such as positioning between the two rolls and the rotating timing thereof are required to be made before starting a work, and there is a fear that a strip is cut two times.
   It is necessary to use three kinds of disk-shaped cutters in the example shown in the drawings and in addition, the disk-shaped cutter of the roll used in both processes is consumed in a short time by a side pressure applied by the two rolls.
2. In shaping the strip, the strip-shaped lift portion is pressed by the top portion of the projection of the disk-shaped cutter and pulled in the rotational direction of the disk-shaped cutter, with the result that tensile stress concentrates on the rear portion of the strip-shaped lift portion. In the conventional manufacturing apparatus, as shown in Fig. 19, the projection (e) is longitudinally symmetrical with respect to a line, the top portion (m) thereof is positioned in the center in the rotational direction of the disk-shaped cutter, and the length of the rear portion of the strip is only half of the whole length of the strip-shaped lift portion (a). Therefore, the thickness of the rear portion of the strip is locally reduced and as such, the strip is likely to break when it is expanded.
3. According to the conventional apparatus, the relief (l) thicknesses of the disk-shaped cutters (f) and (j) are approximately the same in the base portion and peripheral portion thereof as shown in Fig. 20. Therefore, the disk-shaped cutter is likely to break in the base portion thereof. In particular, the disk-shaped cutter of the roll used in the two processes is likely to be damaged by the side pressure as described in item 1.
4. As shown in Fig. 21, with the expansion of the strip in the widthwise direction thereof, the connecting portions (b) adjacent to each other widthwise are separated from each other widthwise, with the result that first, the strip-shaped lift portion (a) is twisted, then, each connecting portion (b) rotates in the twist-removing direction. Thereafter, each strip-shaped lift portion (a) is bent with respect to the connecting portion (b) in the direction in which each strip-shaped lift portion (a) has been curved, with the result that the separation of the adjacent connecting portions (b) progresses.

As described above, according to the conventional art, the strip-shaped lift portion is twisted when an expanding starts. Therefore, a great force is required in the expanding operation, so that the longevity of an apparatus for the expanding operation becomes short.

This issue is outstanding when the thickness of the strip is large or a mesh is fine.

GB-A-2 120 138 discloses a roll-forming method for perforated and expanded metal strips in which marginal edges of a strip of metal are perforated and engaged by a conveyor to advance the strip , a central web portion of the strip is slotted and then expanded out of the plane of the marginal edges by a series of pressure rollers, and the strip is then cut to the desired length. The slits created by this known method consist merely of a cut line. This results in the disadvantage that it is impossible to sufficiently extend the strip in a mesh condition in a sequential process.

### SUMMARY OF THE INVENTION

Accordingly, an essential object of the present invention is to provide a method for manufacturing an expanded mesh sheet in which slits are formed in one process and an apparatus to be used for carrying out the method.

Another important object of the present invention is to provide an apparatus, for manufacturing an expanded mesh sheet, which does not damage the rear portion of a strip-shaped lift portion in a short time.

A further object of the present invention is to provide an apparatus, for manufacturing an expanded mesh sheet, which does not damage the relief of a disk-shaped cutter in a short time.

A still another object of the present invention is to provide an apparatus, for manufacturing an expanded mesh sheet, capable of expanding a strip with a small force while the strip-shaped lift portion of the strip is being expanded.

In accomplishing these and other objects, according to one aspect of the present invention, there is provided a method for manufacturing an expanded mesh sheet, comprising the steps of forming a plurality of slits on a strip at predetermined pitches to form a plurality of strip-shaped lift portions and connecting portions which connect the strip-shaped lift portions to each other in a lattice pattern, the slits each being intermittently formed in a longitudinal direction of the strip and the adjacent slits in a widthwise direction of the strip being shifted to each other in the longitudinal direction of the strip, and expanding the strip in the widthwise direction thereof, characterized in that in the forming step when the slits are formed on the strips, the strip-shaped lift portions and the connecting portions are simultaneously formed and the strip-shaped lift portions are alternately stretched in the thickness direction of the strip.

According to another aspect of the present invention, there is provided an apparatus for manufacturing an expanded mesh sheet, comprising a pair of rolls engaged to each other, each roll having a plurality of disk-shaped cutters concentrically located and spaced between the adjacent cutters at approximately the same interval as thickness of the cutter to form slits on a strip, rotary axes of the rolls being parallel to each other and the rolls being shifted in the axes to each other at the interval so that peripheral edge of each cutter is inserted into the interval between adjacent cutters to which the cutter is opposed, and a driving means for driving the rolls for rotation, characterized in that each cutter of both the rolls has cutting edge portions radially protruded from its peripheral surface and reliefs recessed into its periphery at predetermined pitches such that slits each of which extends in a longitudinal direction of the strip are formed on the strip by the cutting edge portions of the cutters of both the rolls, and strip-shaped lift portions which alternately stretch in the thickness direction of the strip and connecting portions which connect the strip-shaped lift portions to each other on a position between the slits on an extending direction of the slits are formed by the reliefs of the cutters of both the rolls, wherein the cutting edge portions are formed in approximately triangular shape in which a top portion of the cutting edge portions is shifted towards a front side thereof relative to a bottom side thereof in a rotational direction of the corresponding roll and a portion positioned from the top portion towards a rear side thereof in the rotational direction is projected in an outwardly radial direction of the cutter to form a curved portion.

According to the aspects of the present invention, slits for providing the strip-shaped lift portion and the connecting portion can be simultaneously formed by one pair of rolls. Thus, an adjusting operation to be performed before an expanding work starts can be easily carried out, and there is no fear that the strip is cut twice. Further, only one kind of disk-shaped cutter suffices, and the consumption degree of each disk-shaped cutter can be made to be uniform.

According to a further aspect of the present invention, there is provided the apparatus for manufacturing an expanded mesh sheet, wherein the cutting edge portion is formed in approximately triangular shape in which a top portion of the cutting edge portion is shifted towards a front side thereof relative to a bottom side thereof in a rotational direction of the corresponding roll and a portion positioned from the top portion towards a rear side thereof in the rotational direction is projected in an outwardly radial direction of the cutter to form a curved portion.

According to the aspect of the present invention, since the top portion of the projection is displaced towards the front side relative to the bottom side of the projection in the rotational direction of the disk-shaped cutter, the length of the rear portion of the strip-shaped lift portion can be increased. Further, since the curved portion is provided in the rear portion of the projection, the thickness reduction of the rear portion of the strip-shaped lift portion can be made to be uniform in shaping the strip-shaped lift portion. Consequently, the thickness reduction thereof can be prevented from locally occurring and the breakage of the strip-shaped lift portion can be reduced during expanding.

According to a still another aspect of the present invention, there is provided the apparatus for manufacturing an expanded mesh sheet, wherein the relief is so formed by an inclined surface of the periphery of the cutter that a peripheral area of the relief is larger than a bottom area thereof.

According to the aspect of the present invention, since the thickness of a portion corresponding to the relief of the disk-shaped cutter can be increased in the base portion side, the pressure resistant strength of this portion can be increased, and the durability of the disk-shaped cutter can be improved.

According to a still another aspect of the present invention, there is provided the apparatus for manufacturing an expanded mesh sheet, further comprising an expanding means for expanding the strip having the strip-shaped lift portion and the connecting portion in an approximately thickness direction of the strip except for a center portion of the strip in a widthwise direction of the strip.

According to the aspect of the present invention, since the strip having the strip-shaped lift portion and the connecting portion formed thereon is expanded in the direction approximately perpendicular to the strip surface, the strip-shaped lift portion can be bent with respect to the connecting portion in the direction in which the strip-shaped lift portion has been curved, and the strip-shaped lift portion is not twisted unlike the conventional art. Therefore, the strip-shaped lift portion can be expanded with a comparatively small force.

### BRIEF DESCRIPTION OF THE DRAWINGS

Fig. 1 is a side elevation showing a pair of rolls according to an embodiment of the present invention;
Fig. 2 is a partially side elevation showing the disk-shaped cutter of the roll;
Fig. 3 is a plan view of the cutter;
Fig. 4 is a sectional view taken along the line IV-IV shown in Fig. 2;
Fig. 5 is a side elevation showing the entire structure of the roll;
Fig. 6 is a sectional view taken along the line VI-VI shown in Fig. 5;
Fig. 7 is a front view of a vertical longitudinal sectional view showing partially the condition in which a strip-shaped lift portion is formed;
Fig. 8 is a sectional view taken along the line VIII-VIII shown in Fig. 7;
Fig. 9 is a front view of a vertical longitudinal sectional view showing partially the condition in which a connecting portion is formed;
Fig. 10 is a sectional view taken along the line X-X shown in Fig. 9;
Fig. 11 is a side elevation showing a schematic construction of an expanding apparatus according to the embodiment;
Fig. 12 shows the guide means of the ear portion of the expanded mesh sheet;
Fig. 13 is a sectional view taken along the line XIII-XIII shown in Fig. 11;
Fig. 14 is a sectional view taken along the line XIV-XIV shown in Fig. 11;
Figs. 15(a) and 15(b) are a plan view of a strip formed according to the conventional art and a sectional view taken along the line C-C of Fig. 15(a);
Figs. 16(a) and 16(b) are a plan view showing a metallic strip having slits formed according to the conventional art and a sectional view taken along the line D-D of Fig. 16(a);
Fig. 17 is a side elevation showing two pairs of rolls to be used for forming slits according to the conventional art;
Fig. 18 is a plan view showing an expanded strip;
Fig. 19 is a side elevation showing the projection of a disk-shaped cutter of the conventional art;
Fig. 20 is a sectional view taken along the line E-E shown in Fig. 17; and
Fig. 21 is a sectional view taken along the line F-F shown in Fig. 18.

### DETAILED DESCRIPTION OF THE EMBODIMENTS

Before the description of the present invention proceeds, it is to be noted that like parts are designated by like reference numerals throughout the accompanying drawings.

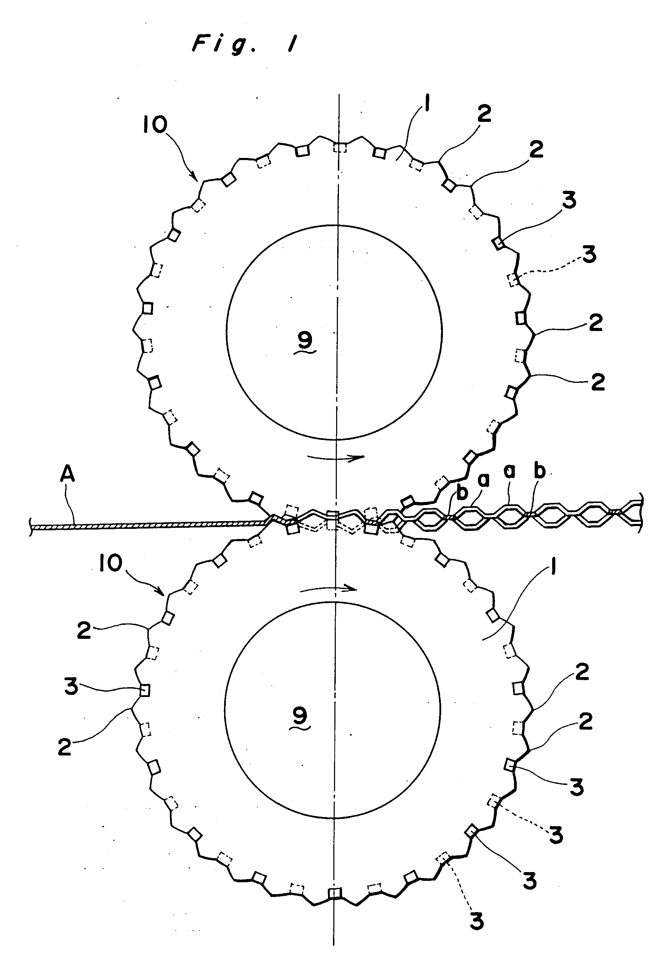

The embodiment of the present invention will be described based on Fig. 1 through Fig. 14.

The manufacture of an expanded mesh sheet comprises a first process for providing a strip (A) with a plurality of strip-shaped lift portions (a) and connecting portions (b) for connecting the strip-shaped lift portions (a) with each other and a second process for expanding the strip (A).

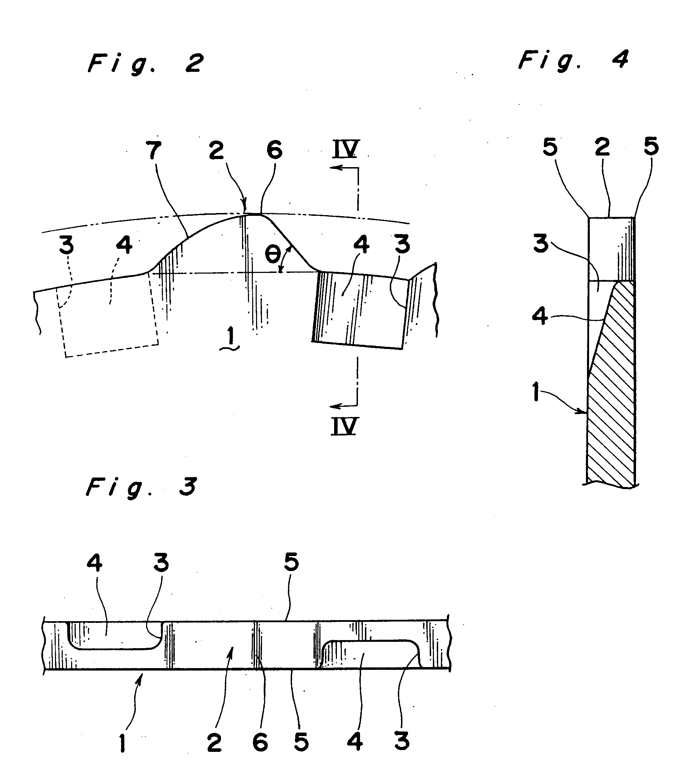

A disc-shaped cutter 1 as shown in Fig. 1 is used by the device of the first process according to this embodiment. As shown in Fig. 2 through Fig. 4, the disk-shaped cutter 1 has a projection 2 for forming the strip-shaped lift portion (a) and a relief 3 for providing the connecting portion (b) such that the projection 2 and the relief 3 are provided at predetermined pitches in the periphery thereof, respectively. The relief 3 is formed in the shape of a concave groove on one side of a flat portion between adjacent projections 2 and 2, and the groove bottom forms an inclined face 4 with respect to the disk-shaped cutter 1. The relief 3 is so formed by the inclined surface 4 of the periphery of the cutter that a peripheral area of the relief 3 is larger than a bottom area thereof. The relief 3 is alternately formed on both peripheries of the projection 2 in the circumferential direction of the disk-shaped cutter 1. A cutting edge portion 5 for shearing the strip (A), that is, to form a slit in cooperation with the corresponding the cutting edge portion 5 is formed in the edge portion of both sides of the projection 2 and in the edge portion of the side on which the relief 3 of the flat portion is not provided.

The projection 2 is approximately triangular and the top portion 6 thereof is displaced towards the front side relative to the bottom side in the rotational direction of the disk-shaped cutter 1. The front side peripheral portion of the top portion 6 of the projection 2 is approximately strip-shaped when the projection 2 is viewed from the side thereof. The front side peripheral portion has an operation for leading the strip (A) in the feeding direction. Preferably, the angle ϑ₁ which the front side peripheral portion makes with the bottom of the triangle is in the range of 45° - 90°, and the most appropriate range is 55° - 75°. The top portion 6 serves as the pulling point in shaping the strip-shaped lift portion (a) into an arch configuration, and preferably, the curvature (R) thereof is as small as 1/2 to 1/1 of the thickness of the strip (A) so that the top portion 6 does not give a bad influence on the strip-shaped lift portion (a). A curved portion 7 externally projecting in the radial direction of the disk-shaped cutter 1 is formed on the rear side peripheral portion of the projection 2 so that the pulling points sequentially move backward with the rotation of the disk-shaped cutter 1. Thus, the thickness decrease of the rear portion of the strip-shaped lift portion (a) can be prevented from being localized.

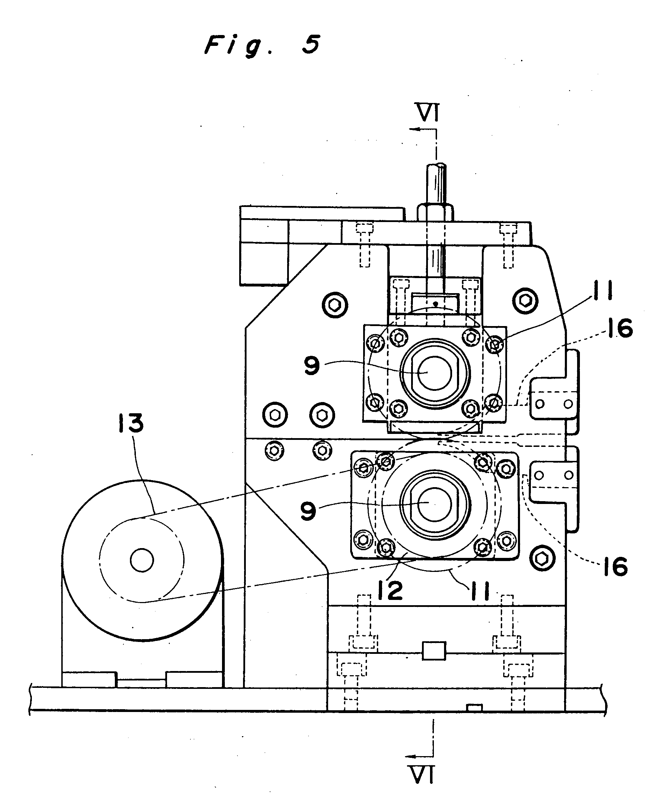

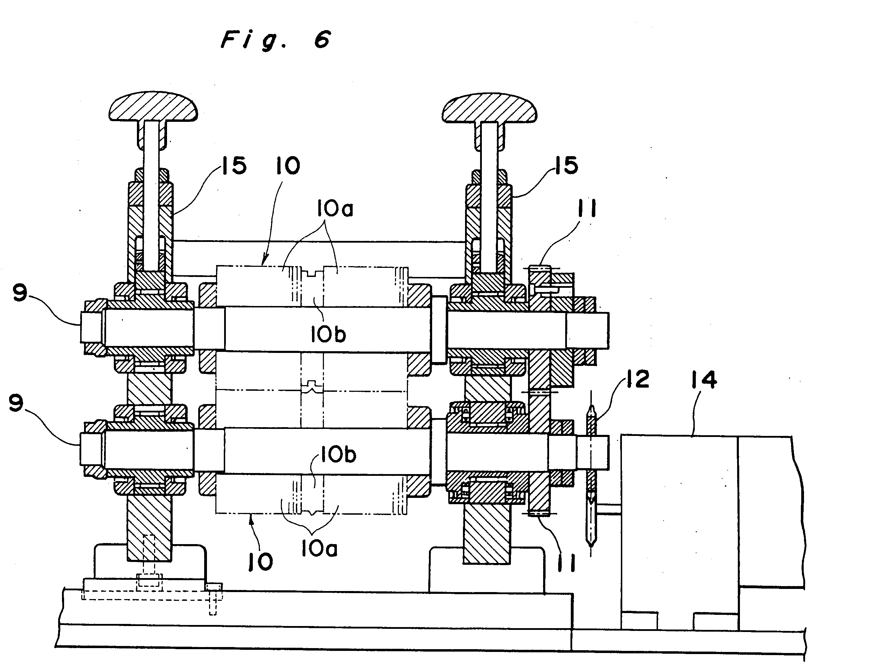

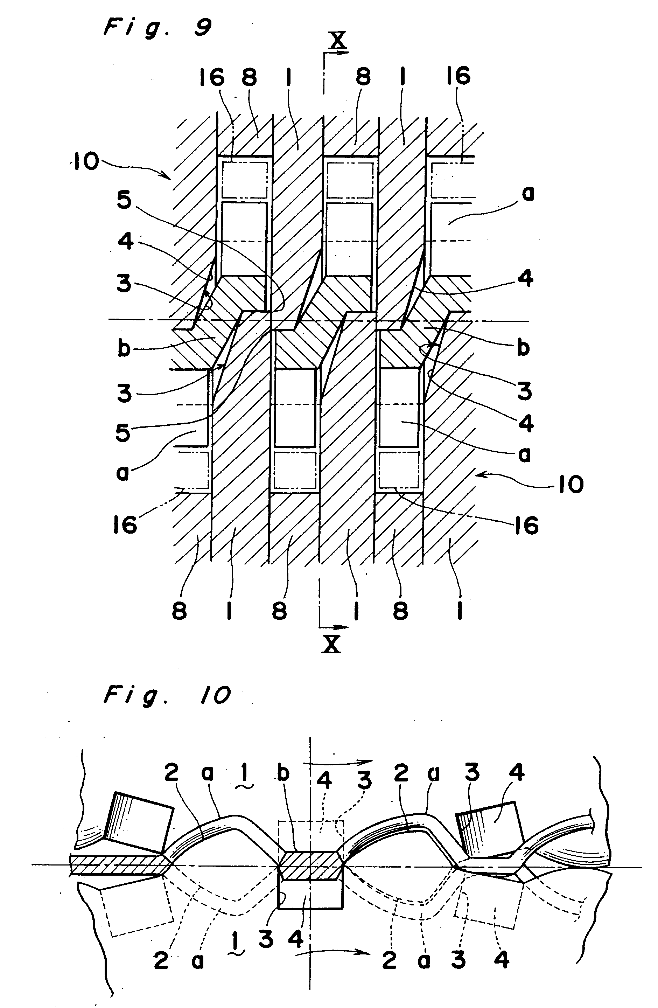

As shown in Figs. 5 and 6, the device to be used in the first process comprises a pair of upper and lower rolls 10, in which the disk-shaped cutter 1 and a disk-shaped spacer 8 having a diameter smaller than that of the disk-shaped cutter 1 are superimposed one on the other, which are arranged on a rotational shaft 9. In each roll 10, the projection 2 of the disk-shaped cutter 1 is positioned on a line parallel with the rotational shaft 9, and the reliefs 3 are opposed to each other in the interval between the disk-shaped cutters 1 adjacent to each other. Both rolls 10 are opposed to each other so that the strip (A) is sheared by the engagement between the cutting edge portion 5 of the disk-shaped cutter 1 of one roll 10 and the cutting edge portion 5 of the disk-shaped cutter 1 of the other roll 10 when each relief 3 is positioned on a line connecting both rotational centers (refer to Fig. 9). The disk-shaped cutter 1 is not provided in the center portion in the axial direction of each roll 10 to secure a non-process portion provided in the longitudinal direction in the center portion of the widthwise direction of the strip (A). Both rotational shafts 9 are parallel to each other. Each roll 10 has two roll bodies 10a to form the slits and the connecting portions; and a non-process portion 10b arranged between the roll bodies 10a to form a non-process portion in the center portion of the strip (A).

Each roll 10 is rotatably supported by the main body of the device, and both rolls 10 simultaneously rotate in the direction shown by the arrow through a gear 11 each fixed to one end of each rotational shaft 9. A sprocket 12 is fixed to one end of the rotational shaft 9 the lower roll 10, and the lower roll 10 is driven by a motor 14 (rotation driving means) via a chain 13 spanned around the sprocket 12. The upper roll 10 can be moved vertically by a vertical position adjusting portion 15 provided on the upper end portion of the main body of the device, so that the dimension of the interval between both rolls 10 can be adjusted.

In the main body of the device, in order to forcibly release a sheared portion of the strip (A) from the space between the disk-shaped cutters 1 with the rotation of the roll 10, a comb-shaped stripper 16 is provided in correspondence with each spacer 8 and in noncontact with the spacer 8 and the disk-shaped cutter 1.

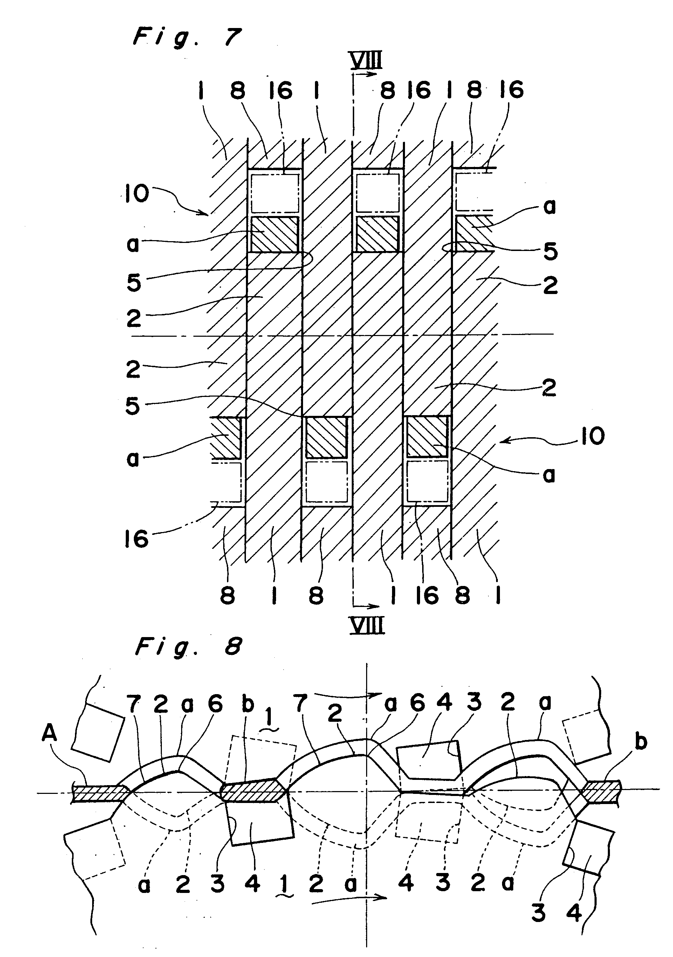

In the above construction, in the first process, slits are formed, on the strip (A) fed into the space between both rolls 10, by the cutting edge portions 5 of the opposing disk-shaped cutters 1, and the strip-shaped lift portion (a) is shaped by being bent by the projection 2 as shown in Figs. 7 and 8, and the slits are made to be intermittent at predetermined pitches between both reliefs 3 to form the connecting portion (b) as shown in Figs. 9 and 10.

The strip (A) in which the strip-shaped lift portion (a) and the connecting portion (b) have been formed is fed to the second process in which the strip (S) is expanded.

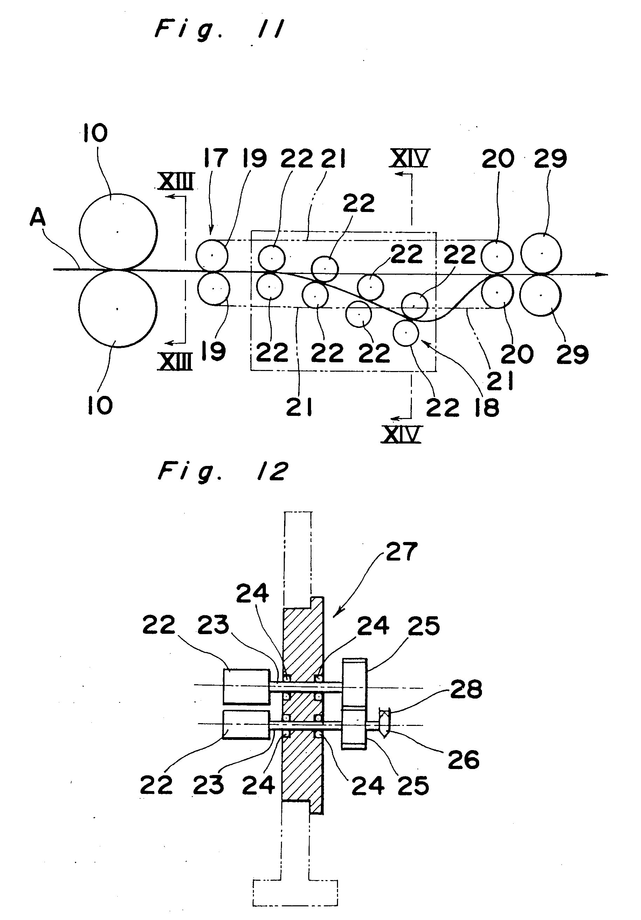

As shown in Fig. 11, the device to be used in the second process comprises a center portion feeding means 17 for supportingly guiding the non-process portion in the center portion of the strip (A) horizontally, an ear portion feeding means 18 for supportingly guiding both ear portions thereof in the feeding direction by moving the ear portions downward, and a flattening means for flattening the expanded strip (A). The center portion feeding means 17 and the ear portion feeding means 18 compose the expanding means according to this embodiment.

In the center portion feeding means 17, an endless belt 21 spanned between a driving roll 19 and a driven roll 20 is provided above and below the strip (A), and the strip (A) is fed by being sandwiched between the upper and lower feeding belts 21. The ear portion feeding means 18 comprises a plurality of units, as shown in Fig. 12, provided on both sides of the strip (A) by vertically adjusting the ear portion holding position of each unit. Each unit comprises a block 27, the vertical position of which is adjustable, having a pair of upper and lower rolls 22 for holding the ear portion of the strip (A) under pressure, a bearing portion 24 for rotatably supporting the rotational shaft 23 of the roll 22, a gear 25 fixed to one end of the rotational shaft 23, and a sprocket 26 fixed to the rotational shaft 23 of the lower roll 22. The roll 22 is driven through a chain 28 spanned around the sprocket 26.

The flattening means comprises a flattening roll 29 which presses the strip (A) both upward and downward.

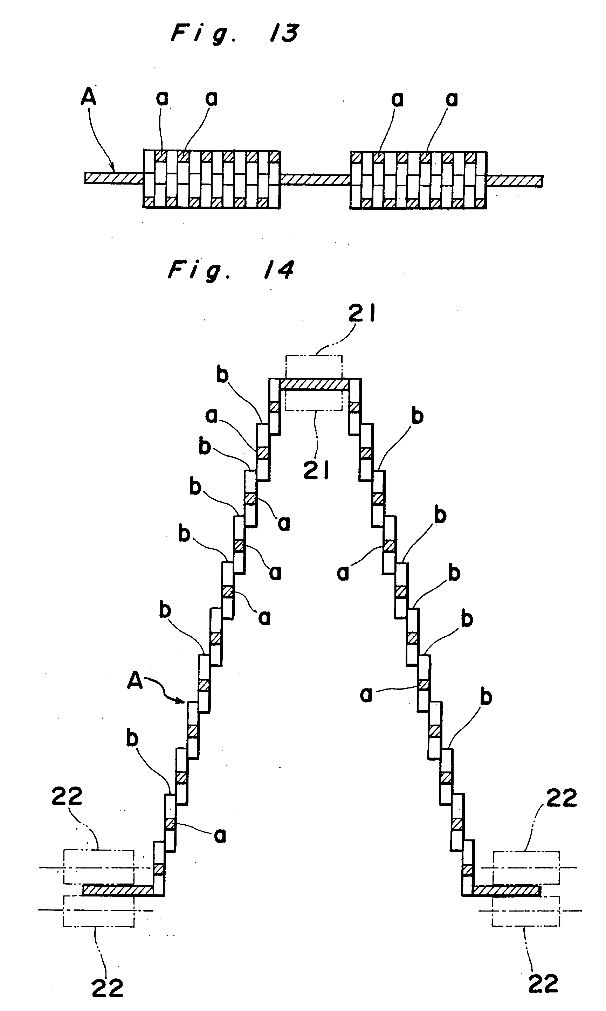

In the second process of the above construction, the connecting portions (b) adjacent to each other in the widthwise direction of the strip (A) can be separated from each other (refer to Fig. 14) without imparting a twist to the strip-shaped lift portion (a) by applying tensile force perpendicularly to the surface of the strip (A) (refer to Fig. 13) discharged from the first process and by bending each strip-shaped lift portion (a) in the direction in which it has been curvedly shaped.

The bent portion and the non-process portion of the strip (A) thus expanded is made to be flush with each other by the flattening roll 29. Thus, a desired expanded mesh sheet can be obtained.

According to the embodiment, slits for providing the strip-shaped lift portion and the connecting portion can be simultaneously formed by the first process. Therefore, the construction of the disk-shaped cutter and the operation for adjusting the positioning between the two rolls can be simplified. Moreover, according to the embodiment, since the thickness decrease of the strip-shaped lift portion which occurs at the time of shaping by being expanded can be made to be uniform, a thickness reduction can be prevented from locally occurring, and as such, damage can be reduced in expanding. According to the embodiment, since the relief is so formed by an inclined surface of the periphery of the cutter that a peripheral area of the relief is larger than a bottom area thereof, the portion composing the relief of the disk-shaped cutter can be reinforced, so that damage of the disk-shaped cutter can be suppressed. According to the embodiment, since the apparatus further comprises an expanding means for expanding the strip having the strip-shaped lift portion and the connecting portion in an approximately thickness direction of the strip except for a center portion of the strip in a widthwise direction of the strip, the strip can be expanded uniformly and with a comparatively small force.

## Claims

1. A method for manufacturing an expanded mesh sheet, comprising the steps of:
forming a plurality of slits on a strip (A) at predetermined pitches to form a plurality of strip-shaped lift portions (a) and connecting portions (b) which connect the strip-shaped lift portions (a) to each other in a lattice pattern, the slits each being intermittently formed in a longitudinal direction of the strip (A) and the adjacent slits in a widthwise direction of the strip (A) being shifted to each other in the longitudinal direction of the strip (A); and
expanding the strip (A) in the widthwise direction thereof;
characterized in that
in the forming step when the slits are formed on the strips (A), the strip-shaped lift portions (a) and the connecting portions (b) are simultaneously formed and the strip-shaped lift portions (a) are alternately stretched in the thickness direction of the strip (A).

2. An apparatus for manufacturing an expanded mesh sheet, comprising:
a pair of rolls (10) engaged to each other, each roll having a plurality of disk-shaped cutters (1) concentrically located and spaced between the adjacent cutters (1) at approximately the same interval as thickness of the cutter (1) to form slits on a strip (A), rotary axes of the rolls (10) being parallel to each other and the rolls being shifted in the axes to each other at the interval so that peripheral edge of each cutter (1) is inserted into the interval between adjacent cutters (1) to which the cutter (1) is opposed; and
a driving means (14) for driving the rolls (10) for rotation,
characterized in that
each cutter (1) of both the rolls (10) has cutting edge portions (5) radially protruded from its peripheral surface and reliefs (3) recessed into its periphery at predetermined pitches such that slits each of which extends in a longitudinal direction of the strip (A) are formed on the strip (A) by the cutting edge portions (5) of the cutters (1) of both the rolls (10), and strip-shaped lift portions (a) which alternately stretch in the thickness direction of the strip and connecting portions (b) which connect the strip-shaped lift portions (a) to each other on a position between the slits on an extending direction of the slits are formed by the reliefs (3) of the cutters (1) of both the rolls (10), wherein the cutting edge portions (5) are formed in approximately triangular shape in which a top portion (6) of the cutting edge portions (5) is shifted towards a front side thereof relative to a bottom side thereof in a rotational direction of the corresponding roll (10) and a portion positioned from the top portion (6) towards a rear side thereof in the rotational direction is projected in an outwardly radial direction of the cutter (1) to form a curved portion (7).

3. The apparatus for manufacturing an expanded mesh sheet, as claimed in claim 2, wherein the relief (3) is so formed by an inclined surface (4) of the periphery of the cutter (1) that a peripheral area of the relief (3) is larger than a bottom area thereof.

4. The apparatus for manufacturing an expanded mesh sheet, as claimed in claim 2 or 3, further comprising an expanding means (17, 18) for expanding the strip (A) having the strip-shaped lift portion and the connecting portion in an approximately thickness direction of the strip (A) except for a center portion of the strip (A) in a widthwise direction of the strip (A).

## Patentansprüche

1. Verfahren zur Herstellung eines Streckmaschenbleches mit den Schritten:
eine Mehrzahl von Schlitzen auf einem Streifen (A) an vorbestimmten Teilungen auszubilden, um eine Mehrzahl von streifenförmigen erhöhten Abschnitten (a) und Verbindungsabschnitten (b), welche die streifenförmigen erhöhten Abschnitte (a) in einem Gittermuster miteinander verbinden, zu formen, wobei jeder der Schlitze mit Unterbrechungen in Längsrichtung des Streifens (A) geformt ist und die angrenzenden Schlitze in Querrichtung des Streifens (A) zueinander in der Längsrichtung des Streifens (A) verschoben werden; und den Streifen (A) in dessen Querrichtung zu dehnen;
dadurch gekennzeichnet, daß
in dem Formschritt, bei dem die Schlitze auf dem Streifen (A) geformt werden, die streifenförmigen erhöhten Abschnitte (a) und die Verbindungsabschnitte (b) gleichzeitig geformt werden und die streifenförmigen erhöhten Abschnitte (a) wechselweise in der Richtung der Dicke des Streifens (A) gedehnt werden.

2. Vorrichtung zur Herstellung eines Streckmaschenbleches, mit: zwei miteinander in Eingriff befindlichen Rollen (10), wobei jede Rolle eine Mehrzahl von scheibenförmigen Schneidwerkzeugen (1) besitzt, die konzentrisch und zwischen den angrenzenden Schneidwerkzeugen (1) mit annähernd demselben Abstand wie die Dicke eines der Schneidwerkzeuge (1) angeordnet sind, um Schlitze auf einem Streifen (A) zu formen, Rotationsachsen der Rollen (10) parallel zueinander verlaufen und die Rollen in den Achsen zueinander um den Abstand verschoben sind, so daß die äußerste Kante jedes Schneidwerkzeuges (1) in den Zwischenraum zwischen angrenzenden Schneidwerkzeugen (1) eingefügt ist, die dem Schneidwerkzeug (1) gegenüberliegen; und
einem Antriebsmittel (14), um die Rollen (10) zur Rotation zu bringen,
dadurch gekennzeichnet, daß
jedes Schneidwerkzeug (1) beider Rollen (10) radial aus seiner Umfangsfläche hervortretende Schneidkantenabschnitte (5) und an vorbestimmten Teilungen in seinem Umfang eingelassene Aussparungen (3) besitzt, so daß durch die Schneidkantenabschnitte (5) der Schneidwerkzeuge (1) beider Rollen (10) Schlitze, welche sich jeweils in Längsrichtung des Streifens (A) erstrecken, auf dem Streifen (A) geformt werden, und streifenförmige erhöhte Abschnitte (a), welche sich abwechselnd in der Richtung der Dicke des Streifens erstrecken, und Verbindungsabschnitte (b), welche die streifenförmigen erhöhten Abschnitte (a) an einer Stelle zwischen den Schlitzen in einer verlängerten Richtung der Schlitze verbinden, durch die Aussparungen (3) der Schneidwerkzeuge (1) beider Rollen (10) geformt werden, in denen die Schneidkantenabschnitte (5) in annähernd dreieckiger Gestalt geformt sind, in der ein oberer Abschnitt (6) der Schneidkantenabschnitte (5) zu dessen Vorderseite gegenüber dessen Unterseite in Rotationsrichtung der entsprechenden Rolle (10) verschoben ist, und ein Abschnitt, der sich von dem oberen Abschnitt (6) in Richtung auf dessen Rückseite in der Rotationsrichtung erstreckt, in einer nach außen gerichteten radialen Richtung des Schneidwerkzeuges (1) ragt, um einen gebogenen Abschnitt (7) zu formen.

3. Vorrichtung zur Herstellung eines Streckmaschenbleches nach Anspruch 2, in dem die Aussparung (3) so durch eine geneigte Oberfläche (4) des Randes des Schneidwerkzeuges (1) geformt ist, daß eine Umfangsfläche der Aussparung (3) größer ist als eine Fläche von dessen Unterseite.

4. Vorrichtung zur Herstellung eines Streckmaschenbleches nach Anspruch 2 oder 3, außerdem mit einem Dehnungsmittel (17, 18), um den Streifen (A) zu dehnen, der, ausgenommen ein zentraler Abschnitt des Streifens (A) in einer Querrichtung des Streifens (A), den streifenförmigen erhöhten Abschnitt und den Verbindungsabschnitt ungefähr in der Richtung der Dicke des Streifens (A) besitzt.

## Revendications

1. Procédé de fabrication d'une feuille déployée, comprenant les étapes suivantes :
la formation de plusieurs fentes dans une bande (**A**) avec des pas prédéterminés pour la formation de plusieurs parties (**a**) de soulèvement en forme de bandes et de plusieurs parties (**b**) de raccordement des parties (**a**) de soulèvement les unes aux autres avec un dessin de treillis, les fentes étant chacune formées par intermittence dans la direction longitudinale de la bande (**A**) et les fentes adjacentes dans la direction de la largeur de la bande (**A**) étant décalées les unes vers les autres dans la direction longitudinale de la bande (**A**), et
le déploiement de la bande (**A**) dans la direction de sa largeur,
caractérisé en ce que
dans l'étape de formation, lorsque les fentes sont réalisées sur la bande (**A**), les parties de soulèvement (**a**) et les parties de raccordement (**b**) sont formées simultanément, et les parties de soulèvement (**a**) sont étirées en alternance dans la direction de l'épaisseur de la bande (**A**).

2. Appareil de fabrication d'une feuille déployée, comprenant :
une paire de cylindres (10) coopérant l'un avec l'autre, chaque cylindre ayant plusieurs organes de coupe (1) en forme de disques disposés concentriquement et espacés entre les organes de coupe adjacents (1) avec un intervalle approximativement égal à l'épaisseur de l'organe de coupe (1) pour la formation de fentes dans une bande (**A**), les axes de rotation des cylindres (10) étant parallèles l'un à l'autre et les cylindres étant décalés suivant leurs axes dudit intervalle afin que le bord périphérique de chaque organe de coupe (1) pénètre dans l'intervalle des organes de coupe adjacents (1) en face duquel est placé l'organe de coupe (1), et
un dispositif (14) d'entraînement en rotation des cylindres (10),
caractérisé en ce que
chaque organe de coupe (1) des deux cylindres (10) a des parties (5) de bord de coupe dépassant radialement de la surface périphérique et des dégagements (3) formés à sa périphérie avec des pas prédéterminés de manière que des fentes disposées chacune dans la direction longitudinale de la bande (**A**) soient formées sur la bande (**A**) par les parties (5) de bord de coupe des organes de coupe (1) des deux cylindres (10), et des parties (**a**) de soulèvement en forme de bandes qui sont étirées en alternance dans la direction de l'épaisseur de la bande et des parties de raccordement (**b**) qui raccordent les parties de soulèvement (**a**) les unes aux autres à un emplacement compris entre les fentes dans la direction d'allongement des fentes, sont formées par les dégagements (3) des organes de coupe (1) des deux cylindres (10), les parties (5) de bord de coupe ayant une forme pratiquement triangulaire dans laquelle une partie supérieure (6) des parties de bord de coupe (5) est déplacée vers la face avant par rapport à la face arrière dans le sens de rotation du cylindre correspondant (10), et une partie partant de la partie supérieure (6) vers la face arrière dans le sens de rotation dépassant dans la direction radiale vers l'extérieur de l'organe de coupe (1) pour la formation d'une partie courbe (7).

3. Appareil de fabrication d'une feuille déployée selon la revendication 2, dans lequel le dégagement (3) est formé par une surface inclinée (4) de la périphérie de l'organe de coupe (1) de manière qu'une surface périphérique du dégagement (3) soit supérieure à la surface de son fond.

4. Appareil de fabrication d'une feuille déployée selon la revendication 2 ou 3, comprenant en outre un dispositif (17, 18) de déploiement de la bande (**A**) ayant la partie de soulèvement et la partie de raccordement pratiquement dans la direction de l'épaisseur de la bande (**A**) sauf dans la partie centrale de la bande (**A**) où le déploiement est réalisé dans la direction de l'épaisseur de la bande (**A**).
